**Europäisches Patentamt**

**European Patent Office**

**Office européen des brevets**

(11) Publication number : **0 207 588**
**B1**

# EUROPEAN PATENT SPECIFICATION

(45) Date of publication of patent specification :
19.07.89

(51) Int. Cl.⁴ : **D 21 H 3/42**, B 01 D 39/14

(21) Application number : 86302377.6

(22) Date of filing : 01.04.86

(54) Filter paper and method of producing same.

(30) Priority : 24.06.85 JP 138169/85

(43) Date of publication of application :
07.01.87 Bulletin 87/02

(45) Publication of the grant of the patent :
19.07.89 Bulletin 89/29

(84) Designated contracting states :
CH DE FR GB LI

(56) References cited :
US–A– 3 816 495
US–A– 3 949 112
ABSTRACT BULLETIN OF THE INSTITUTE OF PAPER
CHEMISTRY, vol. 50, no. 7, January 1980, page 707,
abstract no. 6589, The Institute of Paper Chemistry,
Appleton, Wisconsin, US; L.F. IRTEGOVA et al.:
"Imparting strenght to filter board", & TSELLYULOZA
BUMAGA KARTON no. 4:5 (1979)
ABSTRACT BULLETIN OF THE INSTITUTE OF PAPER
CHEMISTRY, vol. 50, no. 3, September 1979, pages
292,293, abstract 2690, Appleton, Wisconsin, US; & JP
- A - 77 114 710 (DAIKIN INDUSTRIES LTD.) 26-09-
1977

(73) Proprietor : NITTA INDUSTRIES CORPORATION
55-1, Honmachi 2-chome
Higashi-ku Osaka (JP)

(72) Inventor : Nobiraki, Kozi
4-16, Hiedacho
Yamatokooriyama-shi Nara (JP)
Inventor : Yoshida, Kouichi
222-1, Ikezawa-cho
Yamatokooriyama-shi Nara (JP)

(74) Representative : Barker, Rosemary Anne et al
Barlow, Gillett & Percival 94 Market Street
Manchester M1 1PJ (GB)

## Description

This invention relates to filter paper and, more particularly, to filter paper of the type which is used to control airborne particles in clean zones, such as a socalled clean room, a biological clean room, or a clean bench, and to a method of producing same.

Conventional filter paper of this type is usually produced by a method whereby fine micro-glass fibres are added in order to allow the filter paper to efficiently collect submicron particles and a suitable binder is added, in order to increase the strength of the filter paper. A web is produced in a wet process and is then dried. Such filter paper shows a collective efficiency of about 99.98 % (with respect to particles of 0.1 to 3 $\mu$m) and a pressure drop of about 34 to 40 mm W. G. (water gauge) (33.32 x $10^{-2}$ to 39.20 x 10-2 Pa) in the case where the media velocity is 5.3 cm/sec.

Recently, there has been growing demand for the improvement of such collective efficiency, and to this end, attempts have been made to use micro-glass fibres of a smaller diameter as component fibres of filter paper, or to increase the thickness of the filter paper. However, neither of these attempts have been found practical as they involve an increased pressure drop.

As a more recent development there has been proposed a filter paper capable of collecting particles through electrostatic force in combination with its mechanical particle-collecting ability. One type of such filter paper comprises wool fibres covered on the surface thereof with colophony and electrostatically charged by frictional force in a mechanical way. Another type of such filter paper is made in such a way that short fibres of materials such as wool, cellulose, and polyolefine etc., are mixed with ground phenolic resin particles and the mixture is formed into a shape so that the phenolic resin component is electrostatically charged. A disadvantage of these filter papers is that since the manufacture thereof involves electrostatic charging of the component fibres in a mechanical way, they are complicated in structure and not easy to manufacture. Another problem is that consistancy, continuity or stability of the initial collective efficiency due to electrostatic charging cannot be predicted or guaranteed. In addition to the foregoing a filter paper is known which has, as its fibre component, electret fibres, namely fibres prepared by electretifying synthetic resin films with high-voltage electric discharge or otherwise and chopping the electretified films to superfine fibres size, or synthetic fibres which have been electretified directly using highvoltage electric discharge. With such filter paper, too, a disadvantage has been found in that collective efficiency drops rapidly with time as compared with the initial efficiency.

Proposals have previously been made for application of fluorine-containing polymers to filter paper or boards. For example Abstract No. 6589 volume 50 no. 7 of the abstract Bulletin of the Institute of Paper Chemistry discloses use of fluorocarbon latex as a binder to increase the strength of filter board made from cellulose pulp, and Abstract No. 2690 volume 50 no. 3 of the same publication discloses production of paper from PTFE fibres and PTFE colloidal dispersion, which paper is suitable for filters, has 20-80 % voids of average width size 2 to 15 $\mu$m, and has good thermal and chemical resistance. Further U. S. Patent Specification No. 3816495 discloses in Example B, column B a method of water and oil-proofing paper by subsequent, application of a fluorine-containing polymer which includes an isocyanate group. None of these are concerned with improving the particle collective efficiency, without increasing the pressure drop, in the above described conventional filter papers made wholly or principally of micro-glass fibres.

One of the objects of the present invention is to provide a filter paper made principally of micro-glass fibres which can assure substantially improved particle collecting efficiency, with similar pressure drop to that obtained with conventional filter paper.

Another object of the invention is to provide filter paper which can retain its initial particle collecting efficiency for a long time.

A further object of the invention is to provide a filter paper which is simple in structure and easy to manufacture.

A still further object of the invention is to provide a method of producing the aforesaid filter paper easily and at a relatively low cost.

According to a first aspect of the invention, a filter paper is provided the component fibres of which consist wholly or principally of micro-glass fibres, characterised in that a fluorine-containing polymer is deposited on the surface of the component fibres, the amount of the deposit of the fluorine-containing polymer being at least 0.1 wt% relative to the component fibres, and the polymer being selected from the group consisting of polytetrafluoroethylenes, tetrafluoroethylene-hexafluoro-propylene copolymers, polychlorotrifluoroethylenes, and perfluoroalkyl group containing polymers.

According to a second aspect of the invention, a method of producing the filter paper according to the first aspect of the invention is provided which comprises forming a wet web from a slurry prepared by dispersing component fibres, consisting wholly or principally of micro-glass fibres, treating the wet web with a fluorine-containing polymer selected from a group consisting of polytetrafluoroethylenes, tetrafluoroethylene-hexa-fluoropropylene copolymers, polychlorotrifluoroethylenes, and perfluoroalkyl group-containing polymers, and drying the thus treated web.

According to a third aspect of the invention, another method of producing the filter paper according to the first aspect of the invention is provided which comprises dispersing component fibres, consisting wholly or principally of micro-glass fibres, in water, adding thereto a fluorine-containing polymer selected from a group consisting of polytetrafluoroethylenes, tetrafluoroethylene-hexafluoropropylene copolymers, polychlorotrifluoroethylenes, and perfluoroalkyl group-containing polymers, then forming a wet web from the resulting slurry, and subsequently drying the wet web.

The micro-glass fibres used in the present invention preferably having a mean fibre diameter of about 0.1 to 10 µm. In order to provide filter paper of improved strength and chemical resistance a suitable amount (of the order of 1 to 10 wt%) a fine denier aromatic polyamide fibres, carbon fibres or the like may be mixed with the micro-glass fibres.

With regard to the specific fluorine-containing polymers which are proposed PTFE has excellent properties, such as heat resistance, chemical resistance, and solvent resistance. For this reason it is commonly used for such applications as gaskets, packings, and coatings, FEP and PCTFE have good chemical stability compared to PTFE and good processability, and therefore, they are used for the same applications as PTFE, although they are somewhat inferior in other properties to PTFE. A perfluoroalkyl group-containing polymer with a base resin, such as acrylic resin or urethane resin, contains a large number of fluoroalkyl groups. If coated on a solid surface, such a polymer serves to reduce surface energy noticeably. Thus it is mainly used as a water repellent or oil repellent.

The aforesaid fluorine-containing polymers are available in various types, including solution type wherein the polymer is dissolved in a solvent, emulsion type wherein the polymer is in the form of an emulsion polymer, and solid type wherein the polymer is in a powder or granular form, any of the types being useable for the purpose of the invention. For use in the invention, any fluorine-containing polymer preferably has a relatively high fluorine content to permit advantageous utilization of the high degree of electro-negativity of fluorine.

The amount of fluorine-containing polymer deposited is 0.1 wt% or more relative to the component fibres. If the amount of deposit is less than 0.1 wt%, a satisfactory effect cannot be expected. There is no specific upper limit for the amount of deposit, but it is noted that an excessive amount of deposit provides no justifiable improvement, but rather it leads to an increased cost. Therefore, a suitable range of such amount of deposit is 0.1 to 10 wt%.

While it is conventional practice to add a binder in order to increase the strength of the filter paper, it is not particularly required in this invention to add a binder. However, if a binder is to be added at all, low melting-point organic fibres such as polyvinyl alcohol (PVA) fibre, polyamide fibre and polyester fibres, or acrylic resins are preferred. The amount of binder added is generally of the order of 1 to 10 wt% relative to the component fibres of the filter paper and is determined according to the required pressure drop and paper strength.

The reason why the deposit of a fluorine-containing polymer contributes to increasing the particle collecting efficiency of filter paper is assumed to be that since fluorine atoms have high electro-negativity, or the ability to attract electrons when atoms combine, upon deposition of such a polymer an electric polarity is produced on the surface of the component fibres whereby airborne particles are electrically collected.

It is noted in this conjunction that the electronegativity of fluorine is 4.0, the highest of all the elements, with oxygen and chlorine in second place at 3.5, followed by nitrogen at 3.0.

A first method of producing the aforesaid filter paper comprises forming a wet web from a slurry prepared by dispersing the component fibres in water, treating the wet web with the selected fluorine-containing polymer, then drying the thus treated web.

The step of forming a wet web from the slurry of filter paper component fibres dispersed in water is identical to that in conventional practice. As regards the component fibres, the above specified fibres may be used in mixture by selecting different varieties and fibres diameters according to the required collective efficiency and strength.

In the step of treating the wet web with a fluorine-containing polymer, the expression « treating with a fluorine-containing polymer » means dipping the wet web in a polymer solution or emulsion or spraying such solution or emulsion over the surface of the wet web by using a spray, or otherwise applying same thereon, in order to deposit the fluorine-containing polymer on the surface of the component fibres. The concentration of such fluorine-containing polymer solution or emulsion is generally 0.1 to 2 wt%, preferably 0.1 to 1 wt% as a concentration relative to the solvent. If the concentration is less than 0.1 wt%, the fluorine-containing polymer cannot effectively be deposited on the wet web, while a concentration of more than 2 wt% does not result in any further improvement of collective efficiency, but only leads to an increase in cost.

The aforesaid treatment may be carried out at normal temperatures applicable for production of filter paper, and no particular heating or cooling is required.

The step of drying the wet web may be carried out in the same way as is customary with conventional practice. At this step, both drying and fixing of the fluorine-containing polymer is performed. If a binder is added, the strength of the filter paper produced may vary depending upon the drying temperature applied, since the temperature has some bearing upon the crosslinking reaction of the binder. In such case, a temperature range of about 120 to 130 °C is preferred from the standpoint of strength consideration as against cost consideration.

In order to improve the dispersibility of the component fibres in water, a slight amount of acid may be added to the water to acidify the water. For such addition, inorganic acids such as hydrochloric acid, sulphuric acid, and nitric acid, or organic acids such as formic acid, and acetic acid may be used. The pH value of the acid-added solution is preferably about 2 to 5. The lower the pH value, the better is the dispersibility of fibres, but if the pH is lower than 2, the strength of the fibres may be adversely affected and corrosion may be caused to the machine. On the other hand, if the pH exceeds 5, no good effect is obtainable and, therefore, such acid addition becomes almost meaningless.

It may be noted that such acid addition does not affect the contribution of the aforesaid fluorine-containing polymer deposition to the improvement of filter paper performance.

A second method of producing the aforesaid filter paper comprises dispersing the component fibres in water, adding the selected fluorine-containing polymer thereto, then forming a wet web from the resulting slurry, and subsequently drying the wet web.

This second method differs from the first method in that the fluorine-containing polymer is added into the slurry containing the component fibres before the wet web is formed from the slurry. Subsequently to the addition, the forming of the wet web from the slurry and the drying of the wet web are carried out in same way as is customary in conventional practice.

The concentration of fluorine-containing polymer in the slurry is preferably of the order of 0.1 to 15 wt% relative to the component fibres. If the concentration is less than 0.1 wt%, no significant effect is obtainable, while any addition in excess of 15 wt% may give no justifiable improvement.

The filter paper in accordance with the invention shows significant improvement in collecting efficiency (about 99.996 %, four nine) over conventional filter paper (about 99.98 %, three nine) while retaining the same degree of pressure drop as with the latter. Furthermore, the filter paper of the invention shows no decrease in collecting efficiency during long term use, and it is simple in structure and easy to manufacture. Therefore, it may be advantageously used for air-supply filter service in clean rooms in semiconductor and precision industry establishments, or in hospital operating theatres, or in biological clean rooms in pharmaceutical plants, or for exhaust-emission control filter service in biological hazard facilities.

Furthermore, the method of producing the filter paper according to the invention is so simple that it is well suited for mass production purposes and permits good economy in manufacturing costs.

Thus, the filter paper and the method of producing same in accordance with the invention offer good industrial advantages.

The invention will now be further explained in detail by way of the following examples. It is to be understood, however, that the invention is not limited to the exact details of these examples.

## Example 1

As component fibres for filter paper, mixed microglass fibres of three differing fibres diameters (0.35 $\mu$m, 0.45 $\mu$m, and 3.2 $\mu$m) and 2 wt% of aromatic polyamide fibres relative to the weight of the mixed fibres were placed into water and the mixture was stirred so that the fibres were dispersed into the water. In order to improve the dispersibility of the fibres, sulphuric acid was added to the resulting slurry, the slurry being thereby acidified (pH = 4).

Then, the slurry was converted into a wet web on a TAPPI type standard sheet machine.

Meanwhile, an aqueous emulsion of an acrylic acid ester copolymer, as a binder, and an aqueous emulsion of polytetrafluoroethylene, as a fluorine-containing polymer, were mixed together, and a treating solution was prepared by diluting and adjusting the mixture so that the concentration of the binder and that of the fluorine-containing polymer were 2 wt% and 0.3 wt% respectively relative to the water. The aforesaid wet web was dipped in the treating solution at normal temperature for about 10 seconds, was then removed therefrom and dried at 130 °C.

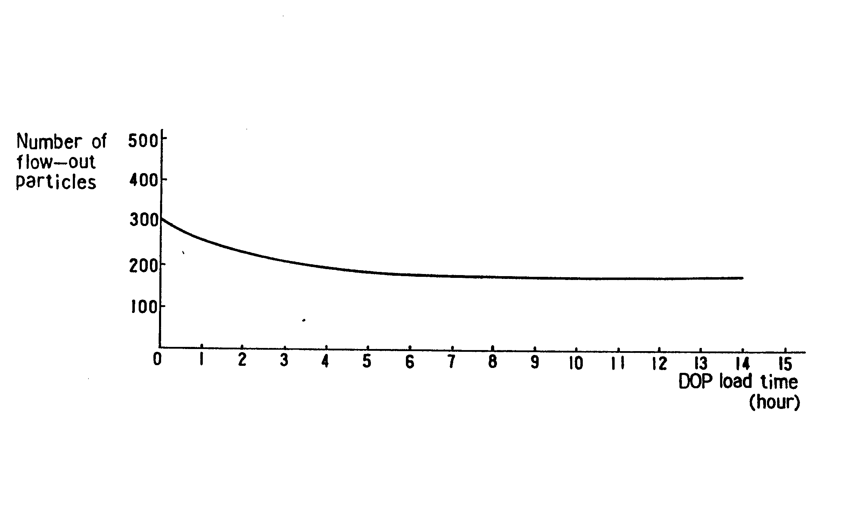

The filter paper thus obtained had a collecting efficiency of 99.9961 % (four nine), with a pressure drop of 35.48 $\times$ 10$^{-2}$ Pa (36.2 mm W. G. (water gauge). The pattern of change in collecting efficiency is shown in the accompanying drawing, in which the single figure is a graph showing the number of flow-out particles against time. It can be clearly seen from this graph that there was no drop in collecting efficiency. This is despite the fact that considerable change was witnessed in pressure drop, with the final value 107.3 $\times$ 10$^{-2}$ Pa (109.5 mm W. G.) found to be about three times as high as the initial value 35.48 $\times$ 10$^{-2}$ Pa (36.2 mm W. G.).

## Comparative Example

In Example 1, without being dipped in the treating solution including an aqueous emulsion of polytetrafluoroethylene, a wet web from the machine was dried under same conditions.

The filter paper thus obtained showed a collecting efficiency of 99.971 % (three nine) and a pressure drop of 35.28 $\times$ 10$^{-2}$ Pa (36.0 mm W. G.).

## Example 2

Mixed micro-glass fibres of same three fibre diameters varieties as those used in Example 1 were placed in water, and an aqueous emulsion of polytetrafluoroethylene was added thereinto so that its concentration was 1 wt% relative to the fibres and the mixture was stirred. In same manner as in Example 1, sulphuric acid was added to acidify (pH = 3).

Then, the slurry was converted into a wet web on the TAPPI type standard sheet machine.

Meanwhile, an aqueous emulsion of an acrylic acid ester copolymer, as a binder, was diluted and adjusted to a concentration of 2 wt%.

Under the same conditions as in Example 1, the wet web was dipped in the binder solution and was then dried.

In this instance, collecting efficiency was 99.9954 % (four nine), and the pressure drop was 36.55 × $10^{-2}$ Pa (37.3 mm W. G.) The pattern of change in collecting efficiency was the same as that in Example 1, with no decrease witnessed.

Example 3

Mixed micro-glass fibres of the same varieties as in Example 1 and the same aromatic polyamide fibres as in Example 1 were used as component fibres for filter paper, and a wet web was produced in same way as in Example 1 (except that the pH of the slurry = 3).

Meanwhile, an aqueous emulsion of an acrylic acid ester copolymer was diluted and adjusted to a concentration of 2 wt%. Separately, a polytetrafluoroethylene solution was adjusted to a concentration of 1.5 wt%.

The aforesaid wet web was first dipped into the diluted aqueous emulsion solution of acrylic acid ester copolymer and then into the polytetrafluoroethylene solution, at normal temperature. Thereafter, the wet web so treated was dried at 130 °C. Dipping time was about 10 seconds in each case. In this instance, collecting efficiency was 99.9965 % (four nine) and pressure drop was 34.69 × $10^{-2}$ Pa (35.4 mm W.G) No decrease in collecting efficiency was witnessed.

Examples 4, 5, 6

A tetrafluoroethylene-hexafluoropropylene copolymer (FEP) was used as a fluorine-containing polymer. Filter paper was produced in same manner as in Examples 1 to 3.

Examples 7, 8, 9

A polychloro-trifluoroethylene (PCTFE) was used as a fluorine-containing polymer. Filter paper was produced in same way as in Examples 1 to 3.

Examples 10, 11, 12

A polymer containing perfluoro-alkyl groups (available for use as water repellent) was used as a fluorine-containing polymer. Filter paper was produced in same way as in Examples 1 to 3.

Example 13

Mixed micro-glass fibres of the same three fibre diameter varieties as those used in Example 1 were put into water, and sulphuric acid was added to acidify the mixture (pH = 3). Stirring followed. Then, the resulting slurry was converted into a wet web.

Meanwhile, an aqueous emulsion of an acrylic acid ester copolymer was diluted for adjustment to a concentration of 2 wt%. Separately, a perfluoro-alkyl group-containing polymer in powder form was dissolved in 1, 1, 1-trichloroethane so that its concentration was adjusted to 1.5 wt%.

The aforesaid wet web was first dipped into the diluted aqueous emulsion of acrylic acid ester copolymer and then into the perfluoro-alkyl group-containing polymer solution, at normal temperature. The wet web so treated was then dried at 120 °C. Dipping time was about 10 seconds in each case.

Measurements of pressure drop and collecting efficiency in Examples 4 to 13 are shown in Table 1. No drop in collecting efficiency was seen throughout Examples 4 to 13.

In examples 1 to 13 and the Comparative Example, the pressure drop, the collecting efficiency, and the change in collecting efficiency with time were determined in the following way.

Pressure drop (mm W.G) : ventilation resistance as measured by a water column manometer when air was passed through filter paper at a passing media velocity of 5.3 cm/sec.

Collecting efficiency (%) : Dioctyl phthalate (DOP) particles having a mean particle diameter of about 0.2 µm were produced and caused to pass through filter paper. Particle size distribution of DOP smoke on both the upstream and the downstream sides of the filter paper was measured by a PMS laser aerosol spectrometer. On the basis of the measurements, collecting efficiency was calculated with respect to 0.1 to 3 µm particles.

Change in collecting efficiency : Filter paper was loaded by passing DOP smoke with a mean particle diameter of about 0.2 µm therethrough at a velocity of 5.3 cm/sec. Measurement was made of the number of flow-out particles every one hour, and a change was calculated in the number of flow-out particles as against the DOP load time.

Table 1

| Example N°. | Fluorine-contained polymer | | Treating method | Collective efficiency (%) | Pressure drop (mm W.G.) | Equiv. Pa × 10⁻ |
|---|---|---|---|---|---|---|
| | Kind | Type | | | | |
| 4 | Tetrafluoro-ethylene-hexafluoro-propylene copolymer (FEP) | | After-treatment | 99.9951 | 37.1 | 36.36 |
| 5 | | Emulsion | Pre-treatment | 99.9955 | 34.2 | 33.52 |
| 6 | | Solution | After-treatment | 99.9961 | 35.5 | 34.79 |
| 7 | Polychloro-trifluoro-ethylene (PCTFE) | | After-treatment | 99.9974 | 35.7 | 34.99 |
| 8 | | Emulsion | Pre-treatment | 99.9965 | 34.8 | 34.10 |
| 9 | | Solution | After-treatment | 99.9964 | 37.3 | 36.55 |
| 10 | Perfluoro-alkyl group-contained polymer | | After-treatment | 99.9965 | 36.3 | 35.57 |
| 11 | | Emulsion | Pre-treatment | 99.9972 | 35.1 | 34.40 |
| 12 | | Solution | After-treatment | 99.9971 | 37.2 | 36.46 |
| 13 | | Solid | After-treatment | 99.9983 | 35.7 | 34.99 |

Note : In the column of treating method, « after treatment » means a method in which, as in Example 1, fluorine-containing polymer is deposited on the surface of component fibres of a wet web after a wet web is formed and « pretreatment » means a method in which, as in Example 2, fluorine-containing polymer is deposited on the surface of component fibres in a slurry before a wet web is formed.

**Claims**

1. A filter paper of the type used to control airborne particles in clean zones, such as a clean room, a biological clean room or a clean bench, the component fibres of which consist wholly or principally of micro-glass fibres, characterised in that a fluorine-containing polymer is deposited on the surface of the component fibres, the amount of the deposit of the fluorine-containing polymer being at least 0.1 wt% relative to the component fibres, and the polymer being selected from the group consisting of polytetrafluoroethylenes, tetrafluoroethylene-hexafluoropropylene copolymers, polychlorotrifluoroethylenes, and perfluoroalkyl group containing polymers.

2. A method of producing a filter paper as claimed in claim 1, said method comprising forming a wet web from a slurry prepared by dispersing component fibres, consisting wholly or principally of micro-glass fibres, treating the wet web with a fluorine-containing polymer selected from a group consisting of polytetrafluoroethylenes, tetrafluoroethylene-hexafluoropropylene copolymers, polychlorotrifluoroethylenes, and perfluoroalkyl group-containing polymers, and drying the thus treated web.

3. A method as claimed in claim 2 wherein the treatment with fluorine-containing polymer comprises dipping the wet web in a fluorine-containing polymer solution or emulsion.

4. A method as claimed in claim 2 wherein the treatment with fluorine-containing polymer comprises spraying fluorine-containing polymer solution or emulsion over the surface of the wet web by means of a spray or otherwise applying same thereon.

6

5. A method as claimed in claim 3 or 4 wherein the concentration of the fluorine-containing polymer solution or emulsion is 0.1 to 2 wt% relative to the solvent.

6. A method of producing a filter paper as claimed in claim 1, said method comprising dispersing component fibres, consisting wholly or principally of micro-glass fibres, in water, adding thereto a fluorine-containing polymer selected from a group consisting of polytetrafluoroethylenes, tetrafluoroethylene-hexafluoropropylene copolymers, polychlorotrifluoroethylenes, and perfluoroalkyl group-containing polymers, then forming a wet web from the resulting slurry, and subsequently drying the wet web.

7. A method as claimed in claim 6 wherein the concentration of the fluorine-containing polymer in the slurry is 0.1 to 15 wt% relative to the component fibres of the filter paper.

8. A method as claimed in any of claims 2 to 7 wherein the slurry is acidic at a pH of 2 to 5.

**Patentansprüche**

1. Filterpapier der zur Kontrolle luftgetragener Teilchen in staubfreien Bereichen, wie in einem staubfreien Raum, einem biologisch reinen Raum oder einem reinen Prüfstand verwendeten Art, dessen Komponentenfasern ganz oder im wesentlichen aus Mikroglasfasern bestehen, dadurch gekennzeichnet, daß auf die Oberfläche der Komponentenfasern ein fluorhaltiges Polymer aufgebracht ist, dessen Menge mindestens 0,1 Gewichtsprozent der Komponentenfasern beträgt, und daß das Polymer aus der aus Polytetrafluoräthylenen, Tetrafluoräthylen-Hexafluorpropylen-Kopolymeren, Polychlortrifluoräthylenen bestehenden Gruppe und die Perfluoralkyl-Gruppe enthaltenden Polymeren ausgewählt ist.

2. Verfahren zur Herstellung eines Filterpapiers nach Anspruch 1, das die Bildung einer nassen Bahn aus einem Brei, der durch Verteilen von Komponentenfasern, die ganz oder im wesentlichen aus Mikroglasfasern bestehen, gebildet ist, die Behandlung der nassen Bahn mit einem fluorhaltigen Polymer, das aus einer aus Polytetrafluoräthylenen, Tetrafluoräthylen-Hexafluorpropylen-Kopolymeren, Polychlortrifluoräthylenen bestehenden Gruppe und die Perfluoralkyl-Gruppe enthaltenden Polymeren ausgewählt ist, und das Trocknen der so behandelten Bahn umfaßt.

3. Verfahren nach Anspruch 2, bei welchem die Behandlung mit fluorhaltigem Polymer aus dem Eintauchen der nassen Bahn in eine fluorhaltige Polymer-Lösung oder -Emulsion besteht.

4. Verfahren nach Anspruch 2, bei welchem die Behandlung mit dem fluorhaltigen Polymer im Aufsprühen einer fluorhaltigen Polymer-Lösung oder -Emulsion auf die Oberfläche der nassen Bahn mittels einer Sprühvorrichtung oder einem anderartigen Aufbringen derselben besteht.

5. Verfahren nach Anspruch 3 oder 4, bei welchem die Konzentration der fluorhaltigen Polymer-Lösung oder -Emulsion 0,1 bis 2 Gewichtsprozent relativ zum Lösungsmittel beträgt.

6. Verfahren zur Herstellung eines Filterpapiers nach Anspruch 1, das ein Verteilen von Komponentenfasern, die ganz oder im wesentlichen aus Mikroglasfasern bestehen, in Wasser, das Hinzufügen eines fluorhaltigen Polymers, das aus einer aus Polytetrafluoräthylenen, Tetrafluoräthylen-Hexafluorpropylen-Kopolymeren, Polychlortrifluoräthylenen bestehenden Gruppe und die Perfluoralkyl-Gruppe enthaltenden Polymeren ausgewählt ist, das anschließende Bilden einer nassen Bahn aus dem sich ergebenden Brei und schließlich das Trocknen der nassen Bahn umfaßt.

7. Verfahren nach Anspruch 6, bei welchem die Konzentration des fluorhaltigen Polymers im Brei 0,1 bis 15 Gewichtsprozent relativ zu den Komponentenfasern des Filterpapiers beträgt.

8. Verfahren nach einem der Ansprüche 2 bis 7, bei welchem der Brei sauer mit einem ph-Wert von 2 bis 5 ist.

**Revendications**

1. Papier-filtre du type qui est utilisé pour retenir des particules en suspension dans l'air dans des zones dépoussiérées, telles qu'une chambre blanche, une chambre biologique propre ou une paillasse propre, dont le composant fibreux consiste entièrement ou principalement de microfibres de verre, caractérisé en ce qu'on dépose un polymère fluoré sur la surface des fibres, la quantité du dépôt du polymère fluoré étant d'au moins 0,1 % en poids par rapport au composant fibreux, et le polymère étant choisi parmi les polytétrafluoroéthylènes, les copolymères de tétrafluoroéthylène et d'hexafluoropropylène, les polychlorotrifluoroéthylènes ainsi que les polymères à groupes perfluoroalkyle.

2. Procédé de fabrication d'un papier-filtre selon la revendication 1, dans lequel on forme une nappe humide à partir d'une suspension préparée en dispersant un composant fibreux consistant entièrement principalement en microfibres de verre, on traite la nappe humide avec un polymère fluoré choisi parmi les polytétrafluoroéthylènes, les copolymères de tétrafluoroéthylène et d'hexafluoropropylène, les polychlorotrifluoroéthylènes ainsi que les polymères à groupes perfluoroalkyle, et on sèche la nappe ainsi traitée.

3. Procédé selon la revendication 2, dans lequel le traitement avec le polymère fluoré, comprend l'immersion de la nappe humide dans une solution ou une émulsion de polymère fluoré.

4. Procédé selon la revendication 2, dans lequel le traitement avec le polymère fluoré, comprend la pulvérisation d'une solution ou d'une émulsion de polymère fluoré sur la surface de la nappe humide, à l'aide d'un dispositif de pulvérisation, ou en appliquant autrement celle-ci.

5. Procédé selon la revendication 3 ou 4, dans lequel la concentration de la solution ou de l'émulsion de polymère fluoré, est de 0,1 à 2 % en poids par rapport au solvant.

6. Procédé de fabrication d'un papier-filtre selon la revendication 1, dans lequel on disperse dans de l'eau, le composant fibreux consistant entièrement ou principalement en microfibres de verre, on y ajoute un polymère fluoré choisi parmi les polytétrafluoroéthylènes, les copolymères de tétrafluoroéthylène et d'hexafluoropropylène, les polychlorotrifluoroéthylènes ainsi que les polymères à groupes perfluoroalkyle, on forme ensuite une nappe humide à partir de la solution résultante, et on sèche ultérieurement la nappe humide.

7. Procédé selon la revendication 6, dans lequel la concentration du polymère fluoré dans la suspension, est de 0,1 à 15 % en poids par rapport au composant fibreux du papier-filtre.

8. Procédé selon l'une quelconque des revendications 2 à 7, dans lequel la suspension est acide avec un pH de 2 à 5.

Number of flow—out particles

DOP load time (hour)

EP 0 207 588 B1